Europäisches Patentamt

European Patent Office

Office européen des brevets

(19)

(11) Numéro de publication : **0 466 597 A1**

# DEMANDE DE BREVET EUROPEEN

(12)

(21) Numéro de dépôt : **91401940.1**

(51) Int. Cl.⁵ : **B23Q 3/08,** B23B 31/30

(22) Date de dépôt : **11.07.91**

(30) Priorité : **13.07.90 FR 9008946**

(43) Date de publication de la demande :
**15.01.92 Bulletin 92/03**

(84) Etats contractants désignés :
**DE FR GB**

(71) Demandeur : **COMMISSARIAT A L'ENERGIE ATOMIQUE**
**31-33, rue de la Fédération**
**F-75015 Paris (FR)**

(72) Inventeur : **Fougerolle, Philippe**
**5 rue de la Pinsonnière**
**F-37260 Monts (FR)**
Inventeur : **Denis, Roland**
**202 rue de Cormery**
**F-37550 Saint Avertin (FR)**
Inventeur : **Lafoux, Didier**
**4 rue des Ecoles, La Rauderie**
**F-37260 Monts (FR)**

(74) Mandataire : **Mongrédien, André et al**
**c/o BREVATOME 25, rue de Ponthieu**
**F-75008 Paris (FR)**

(54) **Procédé d'usinage de pièces déformables et application à l'usinage d'un cône.**

(57)   Le procédé permet d'usiner des pièces de faible épaisseur, sensibles à la déformation lors de leur usinage.

Il consiste à créer un support mécanique au moyen d'un grand nombre de pièces de petites dimensions, telles que des billes (10), placées dans une enveloppe étanche (8), contre la surface opposée (6) de la surface à usiner (4). La rigidification de la pièce à usiner (2) se fait par la mise en dépression de l'enceinte dans laquelle sont placées les billes (10). Ces dernières s'agglomèrent les unes contre les autres pour constituer un support rigide permettant à la pièce à usiner de résister aux pressions des outils, lors des différents usinages.

Application à l'usinage de cônes en céramique.

EP 0 466 597 A1

FIG. 1A

FIG. 1B

## DOMAINE DE L'INVENTION

L'invention concerne l'usinage de pièces ayant tendance à se déformer sous les efforts d'usinage, telles que des tôles, et de manière générale l'usinage de pièces de faible épaisseur. L'invention concerne à la fois, le principe de renfort de la pièce et l'adaptation de ce principe à l'usinage d'un cône de faible épaisseur.

## ART ANTERIEUR

Dans les pièces dont la surface à usiner est importante par rapport à l'épaisseur, la tendance à se déformer au cours de l'usinage, sous les efforts de l'outil de coupe, apparaît. La déformation de la pièce nuit à la précision recherchée de l'usinage de la surface travaillée. Cette déformation peut même conduire à la rupture, lorsque la flèche de déformation est importante, ou lorsque les pièces sont réalisées à l'aide de certains matériaux, tels que les céramiques.

De manière générale, une solution connue de ce problème consiste à réaliser un support rigide qui épouse exactement, sans jeu, la forme de la surface opposée à la surface usinée. La pièce est fixée de manière rigide sur ce support, ce qui revient à augmenter artificiellement l'épaisseur de la pièce et donc sa résistance mécanique vis-à-vis des efforts de coupe. Ce procédé n'est pas facile à mettre en oeuvre, notamment lorsqu'on dispose de pièces qui présentent des surfaces complexes ou des matériaux de module d'élasticité très élevé. Dans ce cas, il est nécessaire de posséder la connaissance exacte du profil de la surface opposée à la surface à usiner. La réalisation du support est alors difficile, voire impossible si l'on veut supprimer le jeu, puisqu'il faut reproduire avec précision le profil de cette surface opposée.

Le but de l'invention est de remédier à ces inconvénients en proposant un procédé de renfort des pièces déformables à l'usinage.

## RESUME DE L'INVENTION

Un premier objet principal de l'invention est un procédé d'usinage d'une surface d'une pièce de faible épaisseur, sensible à la déformation au cours de l'usinage de ladite surface, consistant à maintenir la pièce au moyen d'un support rigide épousant exactement la forme de la face opposée à la face à usiner.

Selon l'invention, le procédé consiste principalement à :

– recouvrir la surface opposée à la surface à usiner d'une couche d'épaisseur suffisante de pièces rigides de petites dimensions, telles que des billes ou des grains ;

– enfermer ladite couche de billes ou de grains dans une enceinte étanche constituée de la pièce à usiner et d'une enveloppe souple, hermétiquement fixée à la pièce à usiner ; et

– à créer un vide partiel à l'intérieur de l'enceinte pour forcer les grains ou les billes à s'agglomérer les uns contre les autres pour limiter le volume de l'enceinte et à se plaquer ainsi contre la surface opposée à la surface à usiner pour constituer une surépaisseur dotant la pièce à usiner d'une résistance mécanique supérieure vis-à-vis des pressions d'usinage exercées sur la surface à usiner.

Ce procédé peut donc s'adapter à n'importe quelle pièce de surface complexe.

Le procédé selon l'invention se complète avantageusement de moyens de guidage des billes ou des grains vers la surface opposée à la surface à usiner, lors de la mise en dépression de l'enceinte étanche. Ces moyens de guidage peuvent être constitués de l'enveloppe souple et de bouchons étanches à l'air.

Le procédé selon l'invention, peut également être complété d'un support de l'enceinte et de la pièce à usiner, sur lequel prennent appui les moyens de guidage.

Un deuxième objet principal de l'invention est un montage d'usinage mettant en oeuvre le procédé précédemment résumé, et adapté pour le tournage de la surface externe d'un cône de faible épaisseur.

Selon l'invention, ce montage comprend :

– une embase possédant une surface de centrage du cône à usiner ;

– un support conique terminé par un arbre de fixation, monté sur ladite embase, et dont le diamètre est inférieur au diamètre du cône pour laisser entre le cône et le support, un espace nécessaire à l'enceinte étanche ;

– des moyens de mise en dépression de l'enveloppe étanche.

L'enveloppe étanche étant constituée de la surface externe du support, de l'embase, de la surface opposée du cône et d'un bouchon placé au sommet du cône.

De manière préférentielle, les moyens de mise en dépression sont constitués d'une conduite pratiquée dans l'embase et débouchant à l'intérieur de l'enveloppe étanche et d'une source extérieure de dépression.

De préférence, les moyens de guidage comportent :

– une rainure hélicoïdale à la surface du cône ; et

– un tuyau souple logé dans la rainure hélicoïdale et mis à la pression atmosphérique.

## LISTE DES FIGURES

L'invention et ses différentes caractéristiques seront mieux comprises à la lecture de la description, accompagnée des figures représentant respectivement :

– figure 1A, un schéma en coupe relatif à la deuxième phase du procédé selon l'invention ;

– figure 1B, un schéma en coupe relatif à la troisième phase du procédé selon l'invention ;

– figure 2, un schéma en coupe relatif à une variante de mise en oeuvre du procédé selon l'invention ;

– figure 3, un schéma en coupe relatif à une mise en oeuvre du procédé selon l'invention, adaptée au tournage d'une pièce conique.

## DESCRIPTION DETAILLEE D'UN MODE DE REALISATION DE L'INVENTION

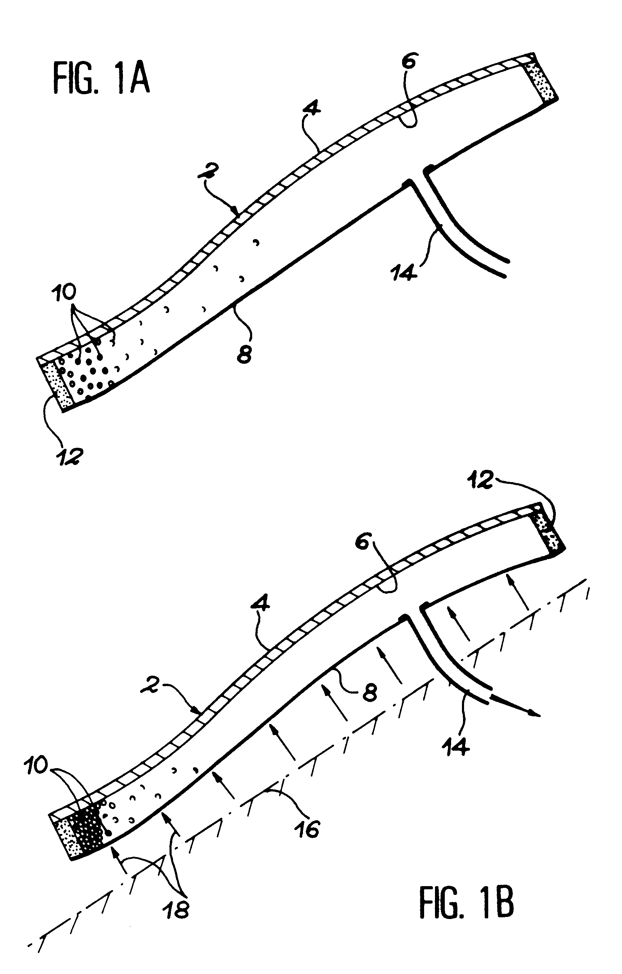

En référence à la figure 1A, le procédé selon l'invention est représenté lors de son application à une pièce à usiner 2, mince et de forme quelconque, par exemple une tôle métallique ou une plaque de céramique. La surface à usiner est référencée 4, la surface opposée à la surface à usiner est référencée 6 et appelée "surface opposée".

La première phase du procédé selon l'invention consiste à appliquer contre la surface opposée 6, une masse de matériau qui puisse être meuble, de manière à s'adapter à toutes les formes possibles que peut prendre cette surface opposée 6. La masse utilisée est constituée, par exemple, de petites billes 10, qui peuvent être en matière plastique, de petites dimensions, de l'ordre de deux à quatre millimètres. La forme d'une bille étant une sphère, le terme "grain" sera donc utilisé pour désigner des petites pièces 10 constituant le matériau de renfort, de manière à ne pas limiter la forme de ces petites pièces à des sphères.

Dans le cas représenté sur les figures 1A et 1B, la pièce à usiner 2 a été représentée inclinée, sa surface à usiner 4 étant placée au dessus. En conséquence, la pose de cette masse de grains 10 contre la surface opposée 6 nécessite aussi l'aide d'une enveloppe pour maintenir ces grains 10. A cet effet, on utilise une enveloppe étanche 8, qui sert dans la deuxième phase du procédé pour maintenir les grains 10 dans un espace étanche. Dans le cas où la surface opposée 6 se trouve sur le dessus de la pièce à usiner 2 et constitue une surface relativement horizontale, on conçoit qu'il est possible de poser la masse de grains 10 sans utiliser, au préalable, une enveloppe de maintien.

La deuxième phase du procédé consiste en effet à fermer la masse de grains 10 dans une enceinte étanche à l'air. Pour réaliser cette enceinte étanche, il est avantageux d'utiliser une enveloppe 8 et de la sceller à la périphérie de la pièce à usiner 2. Ce scellement, de l'enveloppe étanche 8 sur la pièce à usiner, peut se faire à l'aide de joints souples 12, par exemple à l'aide de "joints-mousse" en élastomère. Ce type de joints étanches 12 doit de toute manière être assez compressible.

De manière générale, les deux premières phases du procédé peuvent avoir lieu simultanément, c'est-à-dire que pendant le scellement de l'enveloppe étanche 8, a également lieu le remplissage de l'enveloppe avec les grains 10. Une fois que la quantité suffisante de grains 10 est introduite dans le volume délimité par l'enveloppe étanche 8 et la surface opposée 6 de la pièce 2, à laquelle l'enveloppe étanche 8 est scellée, le scellement de l'enveloppe étanche 8 peut être terminé.

Une des bases du concept du procédé selon l'invention est d'enfermer la masse de grains 10 dans un volume étanche à l'air, contre la surface opposée 6. En conséquence, la deuxième partie du procédé, constituée de la troisième phase, consiste à créer un vide partiel à l'intérieur de l'enceinte constituée de l'enveloppe 8 et de la pièce à usiner 2. Comme le montre la figure 1B, ce vide a pour fonction de réduire le volume de l'enceinte dans laquelle sont enfermés les grains, pour que ceux-ci s'agglomèrent contre la surface opposée 6. Cet agglomérat des grains 10 consistant en une agglutination des grains venant en contact les uns des autres, sous l'effet de la réduction de volume de l'enceinte étanche, ces grains 10 forment alors un aggloméré mécaniquement rigide. Une condition nécessaire à cette rigidité est que la couche soit suffisamment épaisse pour qu'elle soit constituée de plusieurs couches de grains 10.

Du fait que la pièce à usiner 2 est relativement rigide, la surface opposée 6 étant donc fixe, et du fait que l'enveloppe 8 est souple, la réduction de volume se fait par déformation de cette dernière. L'ensemble de grains 10 agglomérés a donc tendance à se plaquer contre la surface opposée 6. Compte tenu de la rigidité de cet agglomérat de grains 10, la pièce à usiner 2 se trouve renforcée par une surépaisseur constituée de l'ensemble des grains 10, tassés les uns contre les autres. La pièce à usiner 2 est donc dotée d'une résistance mécanique, lui permettant de mieux résister à divers efforts d'usinage dus aux outils de coupe en action sur la surface à usiner 4.

La mise en dépression de l'enceinte peut se faire au moyen d'une conduite 14, dont un orifice est fixé de manière étanche à l'enveloppe souple 8. Cette conduite 14 est reliée par son autre extrémité à une source de dépression.

Pour faciliter l'agglutination des grains 10 contre la surface opposée 6, il peut être fait appel à des moyens de guidage de ces grains 10. Il est ainsi par exemple possible de disposer d'un support 16, positionné à côté de la pièce à usiner, en regard de la surface opposée 6. Contre ce support 16, peuvent être placés des moyens élastiques de pression 18, tels que des ressorts pour forcer l'enveloppe souple 8 à se déformer vers la surface opposée 6. On peut ainsi assurer un contact intime entre la surface opposée et l'aggloméré de grains 10.

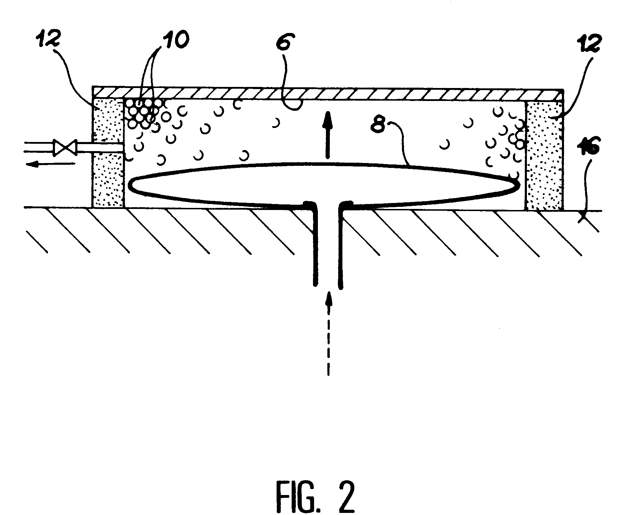

Comme le montre la figure 2, dans une variante de l'invention, on enferme la couche de billes 10 dans une enceinte étanche constituée de la surface opposée 6 de la pièce à usiner, de joints ou de bouchons étanches à l'air 12, mais également du support 16.

On utilise alors un moyen de guidage qui peut être réalisé par une enveloppe souple 8 et étanche en liaison avec l'atmosphère. Lorsque l'on crée le vide dans l'enceinte étanche, l'enveloppe 8 se gonfle et plaque les billes 10 contre la surface 6.

Ainsi, l'enveloppe souple 8 n'a plus la fonction de contenir les billes, mais de servir de moyen de guidage.

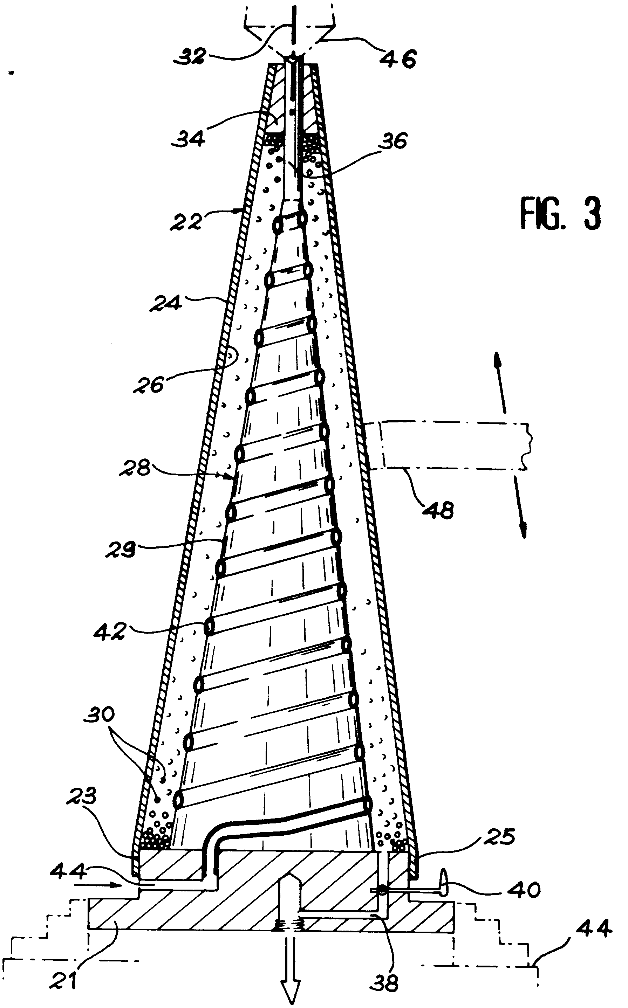

En référence à la figure 3, le procédé selon l'invention est particulièrement adapté à l'usinage d'un cône 22 en céramique, mais qui peut également être métallique ou en un autre matériau susceptible d'être usiné. Le cône 22, devant avoir sa surface externe 24 usinée, est placé sur une embase 21 possédant une surface de centrage 23, sur laquelle une partie cylindrique 25 de la base du cône vient s'ajuster. Le montage est complété par un support 28, également fixé sur l'embase 21 et comportant un arbre de fixation 36, de manière à permettre la manipulation de l'ensemble à l'aide également de l'embase 21. Sa forme est correspondante avec la forme du cône 22 à usiner. En l'occurrence, dans le cas de la figure 3, le support 28 a une forme conique d'axe de révolution 32 et est placé axialement à l'intérieur du cône 22, en regard de la surface opposée 26 de ce dernier. Un espace doit être ménagé entre cette surface opposée 26 et la surface externe 29 du support 28, de manière à pouvoir y loger un grand nombre de grains ou de billes 30.

Dans ce cas, l'enceinte étanche est constituée par la surface opposée 26 du cône 22 à usiner, par une partie de l'embase 21, au niveau de la base du cône à usiner 22, de la surface externe 29 du support 28 et d'un bouchon étanche 34, placé au sommet du cône à usiner 22. Ce bouchon 34 peut entourer l'arbre de fixation 36 dépassant du sommet du cône 22.

Les moyens de mise en dépression sont constitués d'une source extérieure de dépression non représentée et d'une conduite 38 reliée à une prise de vide traversant une partie de l'embase 21, pour déboucher à la périphérie de la surface supérieure de l'embase 21, en regard de l'enceinte. Cette conduite peut être obturée temporairement par un robinet de fermeture 40 permettant de commander la mise sous vide partiel du volume dans lequel sont placées les billes 30.

Dans le but de forcer les billes 30 à se plaquer contre la surface interne 26 du cône 22 à usiner, les moyens de guidage utilisés dans cette réalisation sont constitués principalement d'un tuyau souple 42, entourant le support conique 20. En effet, sur la surface externe de ce dernier, une rainure hélicoïdale a été creusée sur toute la hauteur du support 28. A l'intérieur de celle-ci est placé le tuyau souple 42, qui se trouve ainsi en contact à la fois avec le support 28 et avec les billes 30. Ce tuyau souple 42 est relié à la pression atmosphérique. L'embase 21 peut permettre cette mise à la pression atmosphérique du tuyau souple 42 par une conduite 44, dans laquelle est emmanchée l'extrémité inférieure du tuyau souple 42.

L'utilisation de ce montage se fait de la manière suivante.

Le cône à usiner 22 est placé autour de la surface cylindrique 23 de l'embase 21, entourant ainsi le support 28 entouré lui-même du tuyau souple 42. L'espace, entre ce dernier et le cône 22, est alors rempli de billes 30. Une fois l'enceinte remplie, un bouchon 34 est placé au sommet du cône 22 autour de l'arbre de fixation 36.

La deuxième partie du procédé est alors mise en oeuvre par l'ouverture du robinet 40. La conduite 38 étant reliée à des moyens de mise en dépression non représentés, l'ouverture du robinet 40 permet de mettre en dépression l'enceinte dans laquelle sont placées les billes 30. Celles-ci s'agglomèrent donc les unes contre les autres. Le tuyau souple 42 reste par contre à la pression atmosphérique. La différence de pression régnant à l'intérieur du tuyau souple 42 et à l'intérieur de l'enceinte a pour résultat de faire gonfler le tuyau souple 42, qui prend appui sur la surface externe 29 du support 28. Le tuyau souple 42 a donc tendance à combler les espaces laissés libres par les billes 30, qui s'agglutinent les unes contre les autres. Ainsi, le tuyau souple 42 plaque l'ensemble des billes 30 contre la surface interne 26 du cône à usiner 22. Une fois le vide fait autour des billes 30, le robinet 40 est fermé pour maintenir le vide dans l'enceinte. L'usinage peut alors avoir lieu.

Sur la figure 3, on a schématisé, en traits mixtes, les éléments de fixation du montage selon l'invention sur un tour. Dans la partie supérieure de la figure 3, est représentée la pointe de la poupée mobile d'un tour, introduite dans une surface de centrage de l'arbre de fixation 36. Dans la partie inférieure, sont schématisées deux mâchoires de mandrin 44 du tour et la source extérieure de dépression passant par la broche du tour au moyen d'un joint étanche. Sur la surface externe 24 du cône à usiner 22, est représenté également, en traits mixtes, un outil à charioter 48.

Les billes 30, ainsi agglomérées contre la surface opposée 26, constituent un support rigide épousant exactement la forme de cette surface opposée 26. La pression s'exerçant sur cette surface opposée 26 est égale à la pression atmosphérique. Ceci a pour conséquence, que le cône 22 n'est pas déformé par l'ensemble des dispositifs et peut être usiné sans risque de déformation préalable.

**Revendications**

1. Procédé d'usinage d'une surface (4, 24) d'une pièce (2, 22) de faible épaisseur, sensible à la déformation au cours de l'usinage de ladite surface à usiner (4, 24), consistant à maintenir la pièce (2, 22) au moyen d'un support rigide épousant exactement la forme de la surface opposée (6, 26) à la surface à usiner (4, 24), caractérisé en ce qu'il consiste à :

     – recouvrir la surface opposée (6, 26) d'une couche d'épaisseur suffisante de pièces rigides (10, 30) de petites dimensions, telles que des billes ou des grains ;

     – enfermer ladite couche dans une enceinte étanche, constituée en outre de la pièce à usiner (2, 22) et d'une enveloppe souple (8), hermétiquement fixée à la pièce à usiner (2, 22) ;

     – créer un vide partiel à l'intérieur de l'enceinte pour forcer les grains (10) ou les billes (30) à s'agglomérer les uns contre les autres pour limiter le volume de l'enceinte et à se plaquer ainsi contre la surface opposée (6, 26) de la pièce à usiner (2, 22) pour constituer une surépaisseur mécanique supérieure vis-à-vis des pressions d'usinage exercées sur la surface à usiner (4, 24).

2. Procédé selon la revendication 1, caractérisé en ce qu'il consiste à utiliser des moyens de guidage des grains (10) ou des billes (30) vers la surface opposée (6, 26) lors de la mise en dépression de l'enceinte étanche.

3. Procédé selon la revendication 2, caractérisé en ce que les moyens de guidage sont constitués de l'enveloppe souple (8) et de bouchons étanches à l'air (12).

4. Procédé selon la revendication 2 ou 3, caractérisé en ce qu'il consiste à utiliser un support (16, 28) de l'enceinte et de la pièce à usiner (2, 22), sur lequel prennent appui les moyens de guidage.

5. Montage d'usinage pour la mise en oeuvre du procédé selon l'une quelconque des revendications précédentes, adapté pour le tournage de la surface externe (24) d'un cône (22) de faible épaisseur, comprenant :

     – une embase (21) possédant une surface de centrage (23) du cône à usiner (22) ;

     – un support conique (28) terminé par un arbre de fixation (36) et monté sur l'embase (21), et étant de diamètre inférieur au diamètre du cône (22), de manière à laisser un espace entre le cône (22) et le support (28) ;

     – des moyens de mise en dépression de l'enveloppe étanche, cette dernière étant constituée de la surface externe (29) du support (28), de l'embase (21), de la surface opposée (26) de la pièce à usiner (22) et d'un bouchon (34) placé au sommet du cône (22), entre celui-ci et l'arbre de fixation (36).

6. Montage selon la revendication 5, caractérisé en ce que les moyens de mise en dépression sont constitués d'une source de dépression extérieure et d'une conduite (38) pratiquée dans l'embase (21) et débouchant à l'intérieur de l'enveloppe étanche au moyen d'un joint étanche.

7. Montage selon la revendication 5 ou 6, caractérisé en ce que les moyens de guidage comprennent :

     – une rainure hélicoïdale creusée dans la surface externe (29) du support (28) ;

     – un tuyau souple (42) logé dans la rainure hélicoïdale et mis à la pression atmosphérique.

FIG. 1A

FIG. 1B

FIG. 2

FIG. 3

Office européen
des brevets

**RAPPORT DE RECHERCHE EUROPEENNE**

Numero de la demande

EP 91 40 1940

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN, vol. 10, no. 246 (M-510)[2302], 23 août 1986; & JP-A-61 76 241 (TOSHIBA) 18-04-1986 --- | 1 | B 23 Q 3/08 B 23 B 31/30 |
| A | IDEM --- | 3,5 | |
| A | US-A-4 436 252 (BÜRKLE) * Colonne 2, lignes 4-39; figure 1 * --- | 7 | |
| A | US-A-2 759 733 (SLOAN) ----- | | |

DOMAINES TECHNIQUES RECHERCHES (Int. Cl.5)

B 23 Q 3/00
B 23 B 31/00

Le présent rapport a été établi pour toutes les revendications

| Lieu de la recherche | Date d'achèvement de la recherche | Examinateur |
|---|---|---|
| LA HAYE | 22-10-1991 | BOGAERT F.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)